(19) Europäisches Patentamt
European Patent Office
Office européen des brevets

(11) **EP 1 434 360 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(51) Int Cl.:
***H04B 1/707*** *(2006.01)*

(21) Anmeldenummer: **02406140.0**

(22) Anmeldetag: **24.12.2002**

(54) **Synchronisationsschaltung**

Synchronization circuit

Circuit de synchronisation

(84) Benannte Vertragsstaaten:
**AT BE BG CH CY CZ DE DK EE ES FI FR GB GR IE IT LI LU MC NL PT SE SI SK TR**

(43) Veröffentlichungstag der Anmeldung:
**30.06.2004 Patentblatt 2004/27**

(73) Patentinhaber: **u-blox AG**
**8800 Thalwil (CH)**

(72) Erfinder:
• **Kägi, Daniel**
 **CH-8630 Rüti (CH)**
• **Thiel, Andreas**
 **CH-8006 Zürich (CH)**
• **Mathis, Heinz**
 **CH-8713 Uerikon (CH)**

(74) Vertreter: **Wagner, Wolfgang Heribert**
**Zimmerli, Wagner & Partner AG,**
**Löwenstrasse 19,**
**Postfach**
**8021 Zürich (CH)**

(56) Entgegenhaltungen:
**WO-A-01/37441     US-A- 5 737 360**

• **VIGODA BENJAMIN: "A Nonlinear Dynamic System for Spread Spectrum Code Acquisition" MASTERS THESIS; MIT MEDIA LAB, [Online] 9. August 1999 (1999-08-09), Seiten 1-90, XP002167577 Boston, US Gefunden im Internet: <URL:www.media.mit.edu/physics/ publication s/theses/99.06.vigoda.pdf> [gefunden am 2001-05-16]**

## Beschreibung

### Technisches Gebiet

Die Erfindung betrifft eine Synchronisationsschaltung gemäss dem Oberbegriff des Anspruchs 1. Solche Synchronisationsschaltungen können zur Herstellung einer internen Folge analoger Werte, welche einer in einem empfangenen Signal codierten, jeweils Wiederholungen einer binären Grundfolge enthaltenden externen Folge entspricht und mit ihr synchron ist, eingesetzt werden, wie das z.B. bei der Decodierung von Signalen in der Nachrichtentechnik, insbesondere der mobilen Telefonie und bei Ortungssystemen wie GPS erforderlich ist.

### Stand der Technik

Es sind verschiedene gattungsgemässe Synchronisationsschaltungen mit auf dem Cosinus und quadratischen Funktionen beruhender Rückkopplungsfunktion bekannt (US-A-5 579 337, US-A-5 612 973, WO-A-01/37 441), deren Synchronisationsverhalten jedoch in vielen Fällen unbefriedigend ist und die bei stark verrauschten Signalen nicht brauchbar sind.

### Darstellung der Erfindung

Der Erfindung liegt die Aufgabe zu Grunde, eine gattungsgemässe Synchronisationsschaltung anzugeben, die ein günstigeres Snchronisationsverhalten aufweist als die bekannten gattungsgemässen Synchronisationsschaltungen. Diese Aufgabe wird durch die Merkmale im kennzeichnenden Teil des Anspruchs 1 gelöst.

Die erfindungsgemässe Synchronisationsschaltung synchronisiert im allgemeinen rasch und problemlos und, was bei vielen praktischen Anwendungen von entscheidender Bedeutung ist, auch unter ungünstigen Bedingungen wie schwachem Signal und starken Störungen. So konnte auch bei grossen negativen Signal-Rausch-Abständen ein befriedigendes, für praktische Zwecke ausreichendes Synchronisationsverhalten erzielt werden.

### Kurze Beschreibung der Zeichnungen

Im folgenden wird die Erfindung anhand von Figuren, welche lediglich ein Ausführungsbeispiel darstellen, näher erläutert. Es zeigen

Fig. 1    eine erfindungsgemässe Synchronisationsschaltung,

Fig. 2    den Graphen der bei der erfindungsgemässen Synchronisationsschaltung verwendeten Rückkopplungsfunktion,

Fig. 3    einen Ausschnitt aus einer möglichen Grundfolge und

Fig. 4    die Entwicklung der Leistung eines Rückkopplungssignals in der erfindungsgemässen Synchronisationsschaltung während einer Synchronisation.

### Wege zur Ausführung der Erfindung

Die erfindungsgemässe Synchronisationsschaltung eignet sich für alle Anwendungen, bei denen Daten CDMA-codiert übertragen werden. Sie kann direkt zur Verarbeitung eines von einem empfangenen Signal abgeleiteten externen Signals eingesetzt werden, wenn die Grundfolge eine m-Folge ist, doch ist auch ein Einsatz im Rahmen der Verarbeitung von CDMA-codierten Signalen möglich, welche andere Arten von Grundfolgen verwenden wie z.B. Gold-Folgen oder Kasami-Folgen.

Jede m-Folge kann durch ein binäres rückgekoppeltes Schieberegister der Länge n erzeugt werden und hat u.a. die Eigenschaft, dass mit einer Ausnahme jede Folge einer Länge n - im nachfolgend als Beispiel dargestellten Fall ist $n=10$ - genau ein Mal in der m-Folge der Länge $N=2^n-1$ - hier 1'023 - vorkommt.

Für die binären Grössen und ihre Verknüpfung sind verschiedene Darstellungen möglich. Am geläufigsten ist die Darstellung durch 0 und 1 mit der Addition modulo 2 (auch Exklusiv-Oder-Verknüpfung) $(b_1,b_2) \rightarrow b_1 \oplus b_2$ als sowohl assoziativer als auch kommutativer Verknüpfung, gemäss der folgenden Tabelle:

| $b_2 \backslash b_1$ | 0 | 1 |
|---|---|---|
| **0** | 0 | 1 |
| **1** | 1 | 0 |

Die Verknüpfung eines Elements mit dem Nullelement 0 lässt das erstere unverändert, während die Verknüpfung mit 1 jeweils 0 in 1 und 1 in 0 überführt.

Durch die Transformation

$$(1) \quad b \to p = 2b - 1$$

gelangt man zu folgender Darstellung, die äquivalent, aber leichter implementierbar ist und mit der im Ausführungsbeispiel gearbeitet wird:

| $p_2 \backslash p_1$ | -1 | 1 |
|---|---|---|
| **-1** | -1 | 1 |
| **1** | 1 | -1 |

Hier wird die Verknüpfung durch die Abbildung

$$(2) \quad (p_1, p_2) \to p_1 \otimes p_2 = -p_1 \cdot p_2$$

hergestellt. -1 ist das Nullelement. Die Verknüpfung lässt sich offensichtlich ohne weiteres auf beliebige reelle Zahlen, d.h. analoge Werte ausdehnen.

Jede m-Folge $p_1, ..., p_N$ mit $N = 2^n - 1$ kann hergestellt werden, indem, ausgehend von einer Ausgangsfolge $p_1, ..., p_n$ der Länge n, welche nicht ausschliesslich aus Nullelementen besteht, rekursiv weitere Werte gebildet werden nach dem Muster:

$$(3) \quad p_i = p_{i-n} \otimes p_{i-rm} \otimes ... \otimes p_{i-r1},$$

wobei $0 < r_1 < ... r_m < n$ gilt und das Polynom $x^n + x^{rm} + ... + x^{r1} + 1$ bezüglich der oben definierten Arithmetik prim ist. Z.B. kann jeweils

$$(4) \quad p_i = p_{i-10} \otimes p_{i-3}$$

gelten. Da alle N möglichen Abschnitte der Länge n ausser dem nur aus Nullelementen bestehenden durchlaufen werden, bevor die Ausgangsfolge wiederkehrt, kommt es auf die Wahl der letzteren nicht weiter an.

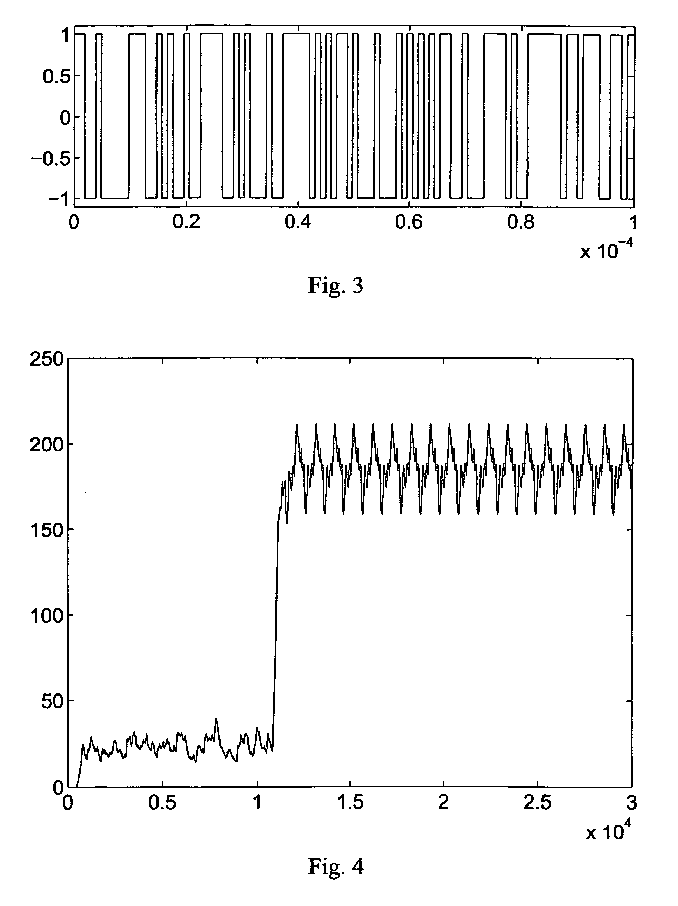

Bei der Uebermittlung von CDMA-codierten Daten ist jeder Uebertragungskanal durch eine bestimmte Grundfolge gekennzeichnet, welche beständig wiederholt wird. Ein Ausschnitt aus einer möglichen Grundfolge ist in Fig. 3 dargestellt. Für jedes Datenbit werden gewöhnlich mehrere, z.B. zwanzig Exemplare der Grundfolge übermittelt. Dabei werden sie mit dem jeweiligen Datenbit verknüpft, so dass die Grundfolge je nach dem Wert desselben entweder in unveränderter Form oder invertiert auftritt.

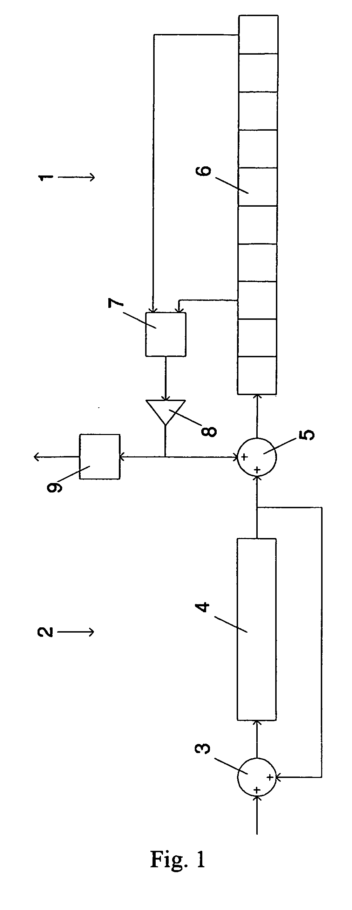

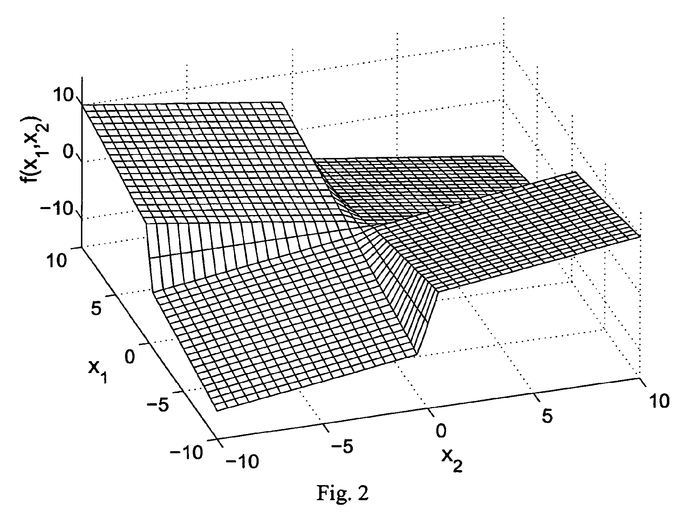

Die erfindungsgemässe Synchronisationsschaltung umfasst (Fig. 1) ein analoges rückgekoppeltes Schieberegister 1 und einen demselben vorgeschalteten Puffer 2. Der Puffer 2 umfasst einen Addierer 3 und ein Schieberegister 4 mit 1'023 Speicherplätzen für analoge Werte. Der Ausgang des Schieberegisters 4 ist auf den zweiten Eingang des Addierers 3 zurückgeführt. Das analoge rückgekoppelte Schieberegister 1 umfasst einen Addierer 5 und ein analoges Schieberegister 6 mit zehn Speicherplätzen. Eine Rückkopplungsschaltung 7 ist mit Abgriffen am zehnten Speicherplatz und einem weiteren oder auch mehreren weiteren Speicherplätzen verbunden. Im Beispiel ist, (4) entsprechend, lediglich ein weiterer Abgriff am dritten Speicherplatz, vorhanden. In der Rückkopplungsschaltung 7 werden die abgegriffenen analogen Werte gemäss einer Rückkopplungsfunktion verknüpft. Der Graph einer möglichen Rückkopplungsfunktion mit zwei Argumenten $f(x_1, x_2)$ ist in Fig. 2 dargestellt. Der Ausgang der Rückkopplungsschaltung 7 ist über einen Skalierer 8 mit dem zweiten Eingang des Addierers 5 verbunden.

Der Ausgang des Skalierers 8 ist ausserdem mit einem Diskriminator 9 verbunden, der einen Quadrierer oder eine andere das Eingangssignal in den positiven Bereich abbildende Schaltung, einen Tiefpassfilter und einen Schwellwertdetektor enthält und ein binäres Signal abgibt. Der Diskriminator kann auch an irgendeiner anderen Stelle der vom Schieberegister 6, der Rückkopplungsschaltung 7, dem Skalierer 8 und dem Addierer 5 gebildeten Schleife angeschlossen sein.

Das Eingangssignal liegt als digitales Signal einer bestimmten Bitbreite, z.B. 12 Bit für den Betrag und einem zusätzlichen Bit für das Vorzeichen, vor. Die Werte können dabei als Gleitkommazahlen oder als ganze Zahlen dargestellt werden. Sie werden jedoch im weiteren zur Unterscheidung von binären Werten als analoge Werte bezeichnet. Das Eingangssignal enthält eine binäre Folge, welche durch ein binäres rückgekoppeltes Schieberegister erzeugbar ist, das das gleiche Rückkopplungsmuster aufweist wie das analoge rückgekoppelte Schieberegister 1, d.h. im dargestellten Fall ein Rückkopplungsmuster, bei dem jeweils der neue Wert durch Verknüpfung entsprechend (4) erzeugt wird. Es kann aber sehr stark verrauscht sein mit einem typischen Signal-Rausch-Abstand von z.B. -35dB.

Die analogen Werte des Eingangssignals, welche Glieder einer Eingangsfolge bilden, gelangen zuerst in den Puffer 2. Dort werden mehrere, z.B. zwanzig Exemplare hintereinander ermittelter Folgen von jeweils 1'023 Werten, die jeweils einer verrauschten Grundfolge entsprechen, welche ja zur Uebermittlung eines Datenbits gewöhnlich mehrere Male hintereinander gesendet werden, überlagert, d.h. es werden in den Speicherplätzen des Schieberegisters 4 die 1'023 den Chips der Grundfolge entsprechenden analogen Werte des ersten Exemplars abgelegt und dann sequentiell an den Addierer 5 zurückgeliefert und die entsprechenden Werte des zweiten Exemplars dazuaddiert und der ursprüngliche Wert mit dem Resultat überschrieben. Dies wird so lange wiederholt, bis die Summe der z.B. zwanzig Exemplare im Schieberegister 4 abgelegt ist.

Da sich bei der Summation das Rauschen lediglich unkorreliert überlagert, kann dadurch eine wesentliche Verbesserung des Rauschabstands erzielt werden. Falls allerdings während der Summation z.B. das Datenbit wechselt und die entsprechende Grundfolge invertiert wird, kann die Summation auch zur teilweisen Auslöschung führen. In diesem Fall wird jedoch innerhalb einer bestimmten Zeitspanne bezüglich dieser Grundfolge keine Synchronisation zu Stande kommen, was dann zu einem Abbruch und einer Füllung des Schieberegisters 4 mit neuen Daten führt, wie weiter unten noch erläutert werden wird.

Die im Puffer 2 gespeicherte Basisfolge wird nun zur Erzeugung einer externen Folge wiederholt ausgelesen und an den Eingang des analogen rückgekoppelten Schieberegisters 1 geleitet. Da die Grundfolge durch Verknüpfung mit dem Datenbit invertiert sein kann, können auch zwei analoge rückgekoppelte Schieberegister verwendet werden, wobei dem einen die externe Folge über einen Invertierer zugeleitet wird.

Dasjenige analoge rückgekoppelte Schieberegister 1, welches eine günstige Folge erhält, d.h. eine, welche einen der codierten Grundfolge $p_1, ..., p_{1'023}$ möglichst ähnlichen Anteil enthält, sollte nun daraus eine dieser Grundfolge entsprechende interne Folge $a_1, ..., a_{1'023}$ erzeugen, die zudem hinsichtlich der Phasenlage mit der externen Folge übereinstimmen soll. Die externe Folge entspricht Wiederholungen der Basisfolge, welche die verrauschte Grundfolge $p_1, ..., p_{1'023}$ enthält.

Für die Stabilität und das Synchronisationsverhalten bei grossen negativen Rauschabständen ist die Wahl einer geeigneten Rückkopplungsfunktion f von beträchtlicher Bedeutung. Mit den bisher bekannten Funktionen konnte bei stark verrauschten Folgen keine Synchronisation erzielt werden. Bei der Suche nach geeigneteren Rückkopplungsfunktionen haben sich verschiedene Merkmale als günstig herausgestellt. So sollte sie bei der gewählten Darstellung der binären Werte - bei anderen Darstellungen müssen die Eigenschaften z.T. entsprechend transformiert werden - möglichst folgende Eigenschaften haben:

Die Rückkopplungsfunktion sollte in jedem Sektor, der durch bestimmte Werte der Vorzeichen der Argumente definiert ist, im wesentlichen eine Linearkombination der Argumente sein. Die sich daraus ergebenden Unstetigkeiten an den Sektorgrenzen können verstetigt oder geglättet werden, doch hat es sich gezeigt, dass Abweichungen das Verhalten eher verschlechtern und daher nicht gross sein sollten.

Wenn die Beträge der Argumente 1 sind, sollte der Betrag des Rückkopplungswertes etwas kleiner als 1 sein, vorzugsweise zwischen 0,90 und 0,99. Es ist günstig, wenn die Rückkopplungsfunktion bei Argumenten des Betrages 1 einen Wert vom Betrag 1 liefert, d.h.

$$(5) \quad |f(x_1, ..., x_m)| = 1 \text{ für } |x_1| = ... = |x_m| = 1,$$

gilt und der Funktionswert dann mit einem wählbaren Faktor k<1, insbesondere 0,90<k<0,99 multipliziert wird. Diese Multiplikation wird durch den einstellbaren Skalierer 8 ausgeführt, welcher der die Rückkopplungsfunktion auswertenden Rückkopplungsschaltung 7 nachgeschaltet ist.

Das Vorzeichen des Rückkopplungswerts sollte jeweils dem Vorzeichen des Produkts der negativen Argumente entgegengesetzt sein, also

$$(6) \quad sig(f(x_1,...,x_m)) = -sig((-x_1) \cdot ... \cdot (-x_m)).$$

Falls $x_1,...,x_m$ jeweils den Betrag 1 haben, also auch als binäre Grössen angesehen werden können, führen die genannten beiden Eigenschaften dazu, dass $f(x_1,...,x_m)$ der Verknüpfung $x_1 \otimes ... \otimes x_m$ entspricht.

Weiter ist es von Vorteil, wenn die Rückkopplungsfunktion f invariant unter Vertauschung der Argumente ist. Als Funktion jedes einzelnen Arguments, also bei Konstanthaltung der übrigen, sollte sie antisymmetrisch und monoton sein.

Eine Rückkopplungsfunktion f, die alle die obengenannten Eigenschaften hat und mit der selbst bei stark verrauschten Signalen Synchronisation erzielt werden konnte, ist

$$(7) \quad f(x_1,...,x_m) = -sig((-x_1) \cdot ... \cdot (-x_m)) \cdot (|x_1| + ... + |x_m|)/m$$

Diese Funktion ist, bis auf eine Skalierung, die sicherstellt, dass (5) erfüllt ist, in jedem Sektor eine Linearkombination der Argumente mit Koeffizienten von +1 oder -1.

Für zwei Variable, d.h.

$$(8) \quad f(x_1,x_2) = -sig(x_1 \cdot x_2) \cdot (|x_1| + |x_2|)/2,$$

ist sie in Fig. 2 dargestellt, wobei lediglich die Uebergänge an den Sektorgrenzen durch lineare Interpolation verstetigt wurden.

Wird eine andere Darstellung binärer Werte gewählt als im geschilderten Beispiel, müssen die Bedingungen an die Rückkopplungsfunktion entsprechend angepasst werden. Auch kann der Faktor k, je nach Implementierung als feste oder variable Grösse, in die Rückkopplungsfunktion integriert sein, was z.B. eine Anpassung der Bedingung (5) erfordern würde.

Da die Synchronisationsschaltung dank dem Puffer 2 mit gespeicherten Daten arbeitet, ist ihre Arbeitsgeschwindigkeit von der Chip-Rate des empfangenen Signals unabhängig und kann wesentlich höher sein. Als Kriterium für eine erfolgreiche Synchronisation dient die Leistung der erzeugten internen Folge, welche am Ausgang des Skalierers 8 abgenommen wird. Während vor einer Synchronisation die Glieder der internen Folge etwa den gleichen Wert haben wie die der externen Folge, wird die letztere bei erfolgter Synchronisation mit einem Faktor 1/(1-k), der also gewöhnlich zwischen 10 und 100 liegt, verstärkt. Die Leistung der internen Folge $(a_i)$ steigt demgemäss stark an, wie in Fig. 4 dargestellt. Dieser Anstieg wird vom Diskriminator 9, in dem die Leistung durch Quadrieren ermittelt und Filterung durch einen Tiefpassfilter geglättet und über einen längeren Zeitabschnitt gemittelt und schliesslich das Resultat mit einem Schwellwert verglichen wird, registriert. Er gibt ein entsprechendes binäres Signal ab, das die erfolgte Synchronisation anzeigt.

Tritt nach einer bestimmten Zeit keine Synchronisation ein, so hat es meist keinen Sinn, das Verfahren mit den gleichen Daten fortzusetzen. Das Ausbleiben der Synchronisation kann zufällig sein, z.B. an einer besonders ungünstigen Form des Rauschanteils liegen, an einer ungünstigen Phasenlage des empfangenen Signals oder auch an einem ungünstigen Abtastzeitpunkt vor einem Datenbitwechsel, der dazu führt, dass im Puffer 2 (Fig. 1) Exemplare von Folgen addiert werden, in welchen der die gesuchte Grundfolge enthaltende Anteil mit unterschiedlichen Vorzeichen auftritt, was zu einer gravierenden Schwächung des besagten Anteils gegenüber dem Rauschanteil führen kann. In solchen Fällen ist es sinnvoll, den Puffer 2 mit einer neuen Basisfolge zu füllen und mit ihr den Synchronisationsprozess neu zu beginnen.

Es sind natürlich verschiedene Abweichungen vom beschriebenen Beispiel möglich. So muss, vor allem bei guter Qualität des Eingangssignal, der Puffer nicht vorhanden sein und die Eingangsfolge kann unmittelbar als externe Folge dem Eingang des analogen rückgekoppelten Schieberegisters zugeführt werden. Für die Implementierung stehen auch verschiedene Möglichkeiten offen, insbesondere können unterschiedliche Grade der Integration gewählt werden. Die erwähnten Bestandteile der Synchronisationsschaltung müssen keineswegs als separate Komponenten vorliegen.

Die Schieberegister können z.B. jeweils von einem entsprechenden Speicher mit linearer Addressierung und einem Schreib- und einem Lesezeiger gebildet werden.

**Bezugszeichenliste**

1 analoges rückgekoppeltes Schieberegister
2 Puffer
3 Addierer
4 Schieberegister
5 Addierer
6 Schieberegister
7 Rückkopplungsschaltung
8 Skalierer
9 Diskriminator

**Patentansprüche**

**1.** Synchronisationsschaltung zur Verarbeitung einer von einer Eingangsfolge abgeleiteten externen Folge analoger Werte, mit einem analogen rückgekoppelten Schieberegister (1), in welchem nach einem bestimmten Rückkopplungsmuster in Speicherplätzen eines Schieberegisters (6) gespeicherte analoge Werte zur Ableitung eines Rückkopplungswertes gemäss einer Rückkopplungsfunktion verknüpft werden, aus dem durch Ueberlagerung mit einem neuen Glied der externen Folge ein neuer Eingangswert erzeugt wird, der dem Eingang des Schieberegisters (6) zugeführt wird, **dadurch gekennzeichnet, dass** die Rückkopplungsfunktion im wesentlichen innerhalb eines jeden durch bestimmte Werte der Vorzeichen der Argumente **gekennzeichnet**en Sektors eine Linearkombination der Argumente ist.

**2.** Synchronisationsschaltung nach Anspruch 1, **dadurch gekennzeichnet, dass** der Betrag der Rückkopplungsfunktion 1 ist, wenn die Beträge der Argumente jeweils 1 sind.

**3.** Synchronisationsschaltung nach Anspruch 1 oder 2, **dadurch gekennzeichnet, dass** das Vorzeichen der Rückkopplungsfunktion stets dem Vorzeichen der Verknüpfung der Argumente entspricht.

**4.** Synchronisationsschaltung nach einem der Ansprüche 1 bis 3, **dadurch gekennzeichnet, dass** die Rückkopplungsfunktion invariant unter Vertauschung der Argumente ist.

**5.** Synchronisationsschaltung nach einem der Ansprüche 1 bis 4, **dadurch gekennzeichnet, dass** die Rückkopplungsfunktion als Funktion eines jeden Argumentes antisymmetrisch und monoton ist.

**6.** Synchronisationsschaltung nach Anspruch 1, **dadurch gekennzeichnet, dass** der Betrag der Rückkopplungsfunktion im wesentlichen dem Mittelwert der Beträge der Argumente entspricht.

**7.** Synchronisationsschaltung nach einem der Ansprüche 1 bis 6, **dadurch gekennzeichnet, dass** der Rückkopplungswert durch Multiplikation des Wertes der Rückkopplungsfunktion mit einem Faktor k<1, der vorzugsweise zwischen 0,90 und 0,99 liegt, hergestellt wird.

**8.** Synchronisationsschaltung nach einem der Ansprüche 1 bis 7, **dadurch gekennzeichnet, dass** sie eine Rückkopplungsschaltung (7) zur Auswertung der Rückkopplungsfunktion und einen Skalierer (8) zur Multiplikation ihres Ausgangswertes mit einem Faktor sowie einen Addierer (5) zur Ueberlagerung des Rückkopplungswertes mit dem neuen Glied der externen Folge umfasst.

**9.** Synchronisationsschaltung nach Anspruch 8, **dadurch gekennzeichnet, dass** sie einen Diskriminator (9) zur Erzeugung eines erfolgte Synchronisation anzeigenden binären Ausgangssignals umfasst, dessen Eingang mit dem Ausgang der Rückkopplungsschaltung (7) verbunden ist und der vorzugsweise einen Quadrierer oder eine andere ein Eingangssignal in den positiven Bereich abbildende Schaltung, einen Tiefpassfilter und einen Schwellwertdetektor umfasst.

**10.** Synchronisationsschaltung nach einem der Ansprüche 1 bis 9, **dadurch gekennzeichnet, dass** sie einen dem analogen rückgekoppelten Schieberegister (1) vorgeschalteten Puffer (2) zur Aufaddierung aufeinanderfolgender, jeweils eine Grundfolge enthaltender Abschnitte einer Eingangsfolge zur Herstellung der externen Folge aufweist.

**11.** Synchronisationsschaltung nach Anspruch 10, **dadurch gekennzeichnet, dass** der Puffer ein Schieberegister (4) umfasst sowie einen demselben vorgeschalteten Addierer (3) zur Addition eines Gliedes der Eingangsfolge zu einem Ausgangswert des Schieberegisters (4).

**Claims**

**1.** Synchronization circuit for processing an external sequence of analogue values which is derived from an input sequence, comprising an analogue feedback shift register (1), in which analogue values stored in memory locations of a shift register (6) are combined according to a specific feedback pattern for deriving a feedback value according to a feedback function, from which a new input value is generated by superposition with a new element of the external sequence, which input value is fed to the input of the shift register (6), **characterized in that** the feedback function is a linear combination of the arguments within substantially each sector **characterized by** specific values of the signs of the arguments.

**2.** Synchronization circuit according to Claim 1, **characterized in that** the magnitude of the feedback function is 1 if the magnitudes of the arguments are each 1.

**3.** Synchronization circuit according to Claim 1 or 2, **characterized in that** the sign of the feedback function always corresponds to the sign of the combination of the arguments.

**4.** Synchronization circuit according to any of Claims 1 to 3, **characterized in that** the feedback function is invariant when the arguments are interchanged.

**5.** Synchronization circuit according to any of Claims 1 to 4, **characterized in that** the feedback function as a function of each argument is antisymmetrical and monotonic.

**6.** Synchronization circuit according to Claim 1, **characterized in that** the magnitude of the feedback function substantially corresponds to the mean value of the magnitudes of the arguments.

**7.** Synchronization circuit according to any of Claims 1 to 6, **characterized in that** the feedback value is produced by multiplying the value of the feedback function by a factor $k<1$, which is preferably between 0.90 and 0.99.

**8.** Synchronization circuit according to any of Claims 1 to 7, **characterized in that** it comprises a feedback circuit (7) for evaluating the feedback function and a gain block (8) for multiplying its initial value with a factor and an adder (5) for superposing the feedback value with a new element of the external sequence.

**9.** Synchronization circuit according to Claim 8, **characterized in that** it comprises a discriminator (9) for generating a binary output signal indicating completed synchronization, the input of which is connected to the output of the feedback circuit (7) and which preferably comprises a squaring circuit or another circuit mapping an input signal into the positive domain, a low-pass filter and a threshold value detector.

**10.** Synchronization circuit according to any of Claims 1 to 9, **characterized in that** it has a buffer (2) in front of the analogue feedback shift register (1) for adding successive segments of an input sequence, each of which contains a fundamental sequence, for generating the external sequence.

**11.** Synchronization circuit according to Claim 10, **characterized in that** the buffer comprises a shift register (4) and an adder (3) in front of it for adding a member of the input sequence to an output value of the shift register (4).

**Revendications**

**1.** Circuit de synchronisation pour le traitement d'une séquence externe de valeurs analogiques inférée d'une séquence d'entrée, avec un registre à décalage analogique rebouclé (1) dans lequel des valeurs analogiques stockées dans des emplacements mémoire d'un registre à décalage (6) d'après un modèle de rétroaction déterminé sont combinées selon une fonction de rétroaction pour inférer une valeur de rétroaction, à partir de laquelle est générée, par superposition avec un nouveau terme de la séquence externe, une nouvelle valeur d'entrée, laquelle est amenée à l'entrée du registre à décalage (6), **caractérisé en ce que** la fonction de rétroaction est, essentiellement à l'intérieur de chaque secteur **caractérisé par** des valeurs déterminées des signes des arguments, une combinaison linéaire des arguments.

**2.** Circuit de synchronisation selon la revendication 1, **caractérisé en ce que** le montant de la fonction de rétroaction est 1 si les montants des arguments sont respectivement 1.

**3.** Circuit de synchronisation selon la revendication 1 ou 2, **caractérisé en ce que** le signe de la fonction de rétroaction correspond toujours au signe de la combinaison des arguments.

**4.** Circuit de synchronisation selon l'une des revendications 1 à 3, **caractérisé en ce que** la fonction de rétroaction est invariante sous permutation des arguments.

**5.** Circuit de synchronisation selon l'une des revendications 1 à 4, **caractérisé en ce que** la fonction de rétroaction est antisymétrique et monotone en tant que fonction de chaque argument.

**6.** Circuit de synchronisation selon la revendication 1, **caractérisé en ce que** le montant de la fonction de rétroaction correspond essentiellement à la moyenne des montants des arguments.

**7.** Circuit de synchronisation selon l'une des revendications 1 à 6, **caractérisé en ce que** la valeur de rétroaction est produite par multiplication de la valeur de la fonction de rétroaction par un facteur $k<1$, lequel se situe de préférence entre 0,90 et 0,99.

**8.** Circuit de synchronisation selon l'une des revendications 1 à 7, **caractérisé en ce qu'**il comprend un circuit de rétroaction (7) pour l'exploitation de la fonction de rétroaction, un normaliseur (8) pour la multiplication de sa valeur initiale par un certain facteur, ainsi qu'un additionneur (5) pour la superposition de la valeur de rétroaction avec le nouveau terme de la séquence externe.

**9.** Circuit de synchronisation selon la revendication 8, **caractérisé en ce qu'**il comprend un discriminateur (9) pour la génération d'un signal de sortie binaire indiquant la synchronisation effectuée, l'entrée dudit discriminateur étant reliée à la sortie du circuit de rétroaction (7) et ledit discriminateur comprenant de préférence un élévateur au carré ou un autre circuit appliquant un signal d'entrée dans la gamme positive, un filtre passe-bas et un détecteur à seuil.

**10.** Circuit de synchronisation selon l'une des revendications 1 à 9, **caractérisé en ce qu'**il présente une mémoire tampon (2) montée en amont du registre à décalage analogique rebouclé (1) et destinée à additionner, pour la génération de la séquence externe, les segments successifs d'une séquence d'entrée qui contiennent respectivement une séquence initiale.

**11.** Circuit de synchronisation selon la revendication 10, **caractérisé en ce que** la mémoire tampon comprend un registre à décalage (4), ainsi qu'un additionneur (3) monté en amont de ce dernier et destiné à additionner un terme de la séquence d'entrée à une valeur de sortie du registre à décalage (4).

Fig. 1

Fig. 2

Fig. 3

Fig. 4